# EUROPÄISCHE PATENTSCHRIFT

(11) **EP 1 688 709 B1**
(45) Veröffentlichungstag und Bekanntmachung des Hinweises auf die Patenterteilung: **30.05.2018**
(21) Anmeldenummer: 05024091.0
(22) Anmeldetag: 04.11.2005
(51) Int. Cl.: G01D 5/20

(54) **Verfahren zur Bestimmung einer aktuellen Bahnposition eines Betätigungselements einer induktiven Sensoreinheit**
Method for determining the actual path position of an actuating element of an inductive sensor unit
Procédé de détermination d'une position le long d'un trajet d'un élément d'actionnement d'une unité de détection inductive

(30) Priorität: 17.12.2004 DE 202004019489 U
(43) Veröffentlichungstag der Anmeldung: 09.08.2006
(73) Patentinhaber: ZF Friedrichshafen AG, 88046 Friedrichshafen (DE)
(72) Erfinder: Götz, Hans, 92256 Hahnbach (DE); Luber, Thomas, 92256 Hahnbach (DE)

(56) Entgegenhaltungen:
- EP-A2- 0 936 385
- WO-A1-2004/027994
- DE-A1- 3 913 861
- DE-A1- 4 406 417
- DE-C1- 10 219 678

## Beschreibung

Die Erfindung bezieht sich auf ein Verfahren zur Bestimmung einer aktuellen Bahnposition eines Betätigungselements einer induktiven Sensoreinheit, die insbesondere für die Positionserkennung eines Fahrzeugsitzes oder für eine Kulissenschaltung eines automatischen Getriebes geeignet ist. Die induktive Sensoreinheit weist eine Mehrzahl von Sensorspulen auf, die planar auf einer Leiterplatte aufgebracht sind. Diese Sensorspulen arbeiten mit einem leitfähigen Betätigungselement zusammen, das beabstandet auf einer vorgegebenen Bahn über die Sensorspulen hinweggeführt wird. Das leitfähige Betätigungselement löst aufgrund von Wirbelstromeffekten Induktivitätsänderungen in den Sensorspulen aus. Die Induktivität einer Sensorspule wird durch die Wirbelströme umso stärker vermindert, je benachbarter das Betätigungselement an der Sensorspule liegt. Zu der induktiven Sensoreinheit gehört demnach auch eine elektrische Auswerteschaltung, die diese Induktivitätsänderungen der Sensorspulen entsprechend der Bahnposition und entsprechend dem Abstand des Betätigungselements von der Sensorspule erfasst und in elektrische Signale ummünzt. Die elektrischen Signale sind insbesondere Sitzpositionssignale oder Gangschaltsignale für die Kulissenschalteinheit eines automatischen Getriebes.

Ein derartiges Verfahren, von dem die Erfindung im Oberbegriff der Patentanspruch 1 ausgeht, ist aus den Offenlegungsschriften WO 2004/027994 A1 und EP 0 936 385 A1 bekannt.

Aus diesem Stand der Technik ist es ferner bekannt, dass die Wegmesssignale abstandsabhängig sind, d. h. wenn das Betätigungselement auf einer gekrümmten Bahn geführt wird oder wenn die Leiterplatte nicht eben ist, dann gehen Abstandsänderungen in die Messsignale ein. Die Leiterplatte kann in vorgegebener Weise gekrümmt sein oder eine große, ebene Leiterplatte kann unbeabsichtigte Krümmungen aufweisen. Im Stand der Technik wird die Abstandsabhängigkeit durch eine Normierung und Kalibrierung in der elektrischen Auswerteschaltung ausgeglichen. Ferner ist im Stand der Technik die Positionserfassung des elektrischen Betätigungselements längs der Bahn, die über die Mehrzahl der Sensorspulen führt, so realisiert, dass die Induktivitätsänderungen jeweils benachbarter Sensorspulen miteinander verglichen werden. Diese Auswertung erlaubt lediglich eine Positionsauflösung gemäß dem Raster der benachbarten Sensorspulen.

Aus der Offenlegungsschrift US 2003/0169033 A1 Ist ferner ein Sensorfeld zur berührungsfreien Positionsmessung bekannt. Dieses Sensorfeld wird zur Bestimmung der Wegposition eines Fahrzeugssitzes genutzt. Jedes Sensorelement erzeugt ein Ausgangssignal, das mit einer Position aus der Menge der möglichen Sitzpositionen korreliert. Für die Sensoren wird der Hall-Effekt genutzt. Zur Steuerung der HallSensoren ist entweder ein Magnet vorgesehen, der an den Sensoren vorbeigeführt wird, oder es ist ein magnetisches Abschirmelement vorgesehen, das durch ein die Sensoren beaufschlagendes Magnetfeld geführt wird. Auch hier erlaubt die Signalauswertung nur eine beschränkte Positionsauflösung gemäss dem Raster der benachbarten Sensoren.

Die Erfindung hat sich demgegenüber die Aufgabe gestellt die Ortsauflösung längs der Messbahn zu verbessern.

Die Lösung dieser Aufgabe gelingt durch Verfahren, die neben den erwähnten Merkmalen des Oberbegriffs der Patentansprüche 1 und 2 zusätzlich die kennzeichnenden Merkmale der Patentansprüche 1 und 2 aufweisen. Zweckmäßige Weiterbildungen gehen aus den jeweiligen Unteransprüchen hervor. Insbesondere kann die Mehrzahl von Sensorspulen auf nur einer oder auf beiden Seiten der Leiterplatte angeordnet werden.

Die Aufgabe kann gemäß der Erfindung aber auch dadurch gelöst werden, dass die Induktivitäten aller Sensorspulen -seriell im Zeitmultiplex oder auch parallel festgestellt- erfasst und mittels eines Algorithmus in eine aktuelle Bahnposition des Messelements umgesetzt werden. Der Algorithmus kann beispielsweise den örtlichen Schwerpunkt aller Induktivitätsänderungen ermitteln oder er kann in einer anderen Variante eine quadratische Interpolation längs der Spulenreihung berechnen. Bei beiden Varianten spiegelt das Maximum der Signalverteilung die Bahnposition des Betätigungselements genauer als im Stand der Technik wieder. Beispielsweise können mit 15 Spulen 300 Positionen eines Fahrzeugsitzes aufgelöst werden. Gleichzeitig wird durch solche Auswerte-Algorithmen auch die Abstandsabhängigkeit des erzeugten Positionssignals verringert, weil die unterschiedlichen, jeweils abstandsabhängigen Messwerte längs der Bahn durch die Verrechnung in ihrer Abstandsabhängigkeit weniger ins Gewicht fallen.

Aus dem Stand der Technik gemäss der deutschen Patentschrift DE 103 19 720 B3 ist eine Kulissenschalteinheit zur Erzeugung von Gangschaltsignalen für ein Automatik-Schaltgetriebe eines Kraftfahrzeugs bekannt. Bei dieser Kulissenschalteinheit ist in einem Schaltbock eine Schaltwelle mit einem Wählhebel gelagert. Der Wählhebel kann in einer ersten Ebene S, aber auch senkrecht dazu in einer zweiten Ebene T verschwenkt werden. Hierzu ist er gelenkig mit der Schaltwelle verbunden. Die Bewegung des Wählhebels entspricht häufig den Stellungen P, R, N und D für die Park-, Rückwärts-, Neutral- und Fahrstellung des Wählhebels. Der Wählhebel verschwenkt einen Rotor mit einem Schaitfinger, der in einem Modulgehäuse untergebracht ist. Der Schaltfinger schwenkt über eine Leiterplatte mit einer induktiven Sensoreinheit und stellt ein Ausführungsbeispiel dar, bei dem der Schaltfinger das gabelförmige Betätigungselement gemäß der vorliegenden Erfindung tragen kann. Andere räumliche Zuordnungen und andere Bahnen des leitfähigen Betätigungselements relativ zu der Leiterplatte sind ebenfalls möglich.

Ausführungsbeispiele der Erfindung werden anhand von Figuren erläutert. Es zeigt:
Fig. 1 : eine Seitenansicht einer Leiterplatte mit einer Mehrzahl von Sensorspulen sowie eine Aufsicht auf ein gabelförmiges Betätigungselement;
Fig. 2: eine perspektivische Darstellung der Leiterplatte, der Sensorspulen und des Betätigungselements gemäß Fig. 1;
Fig. 3: eine graphische Darstellung eines normierten Dämpfungswertes eines von einer einzelnen Spule erzeugten Sensorsignals in Abhängigkeit von dem Überdeckungsgrad, mit dem die Sensorspule vom Betätigungselement überdeckt wird;
Fig. 4: eine graphische Darstellung des normierten Dämpfungswertes des Sensorsignals von Fig. 3 in Abhängigkeit vom Abstand zwischen der Sensorspule und dem Betätigungselement;
Fig. 5: ein Hardwarekonzept zur Messung des induktiven Widerstands (Reaktanzmessung) von beispielsweise vier benachbarten Sensorspulen;
Fig. 6: eine perspektivische Darstellung eines Schaltungsträgers (insbesondere einer Leiterplatte) und der Aufbau einer doppelseitig planar aufgebrachten und beispielsweise in Serie geschalteten Spule;
Fig. 7: in perspektivischer Darstellung den Aufbau einer induktiven Sensoreinheit mit beispielsweise 15 doppelseitigen Spulen und dem gabelförmigen Doppelbetätiger;
Fig. 8: eine graphische Darstellung der Spannungssignalwerte der 15 Spulen gemäß Fig. 7 in Abhängigkeit vom Index der 15 Spulen bzw. in Abhängigkeit von der Wegstrecke des Betätigungselements längs der 15 Spulen;
Fig. 9; eine graphische Darstellung, in der die Spannungswerte gemäß Fig. 9 auf eine Nullnormierung umgerechnet wurden in Werte, die sich für die Anwendung einer Schwerpunktformel eignen;
Fig. 10; alternativ zu der Schwerpunktsberechnung gemäß Fig. 10 eine quadratische Interpolation der normierten Signale mit Hilfe einer Parabel;
Fig. 11 a: eine induktive Sensoreinheit, bei der die Sensorinduktivitäten auf einer Plattenseite angebracht sind;

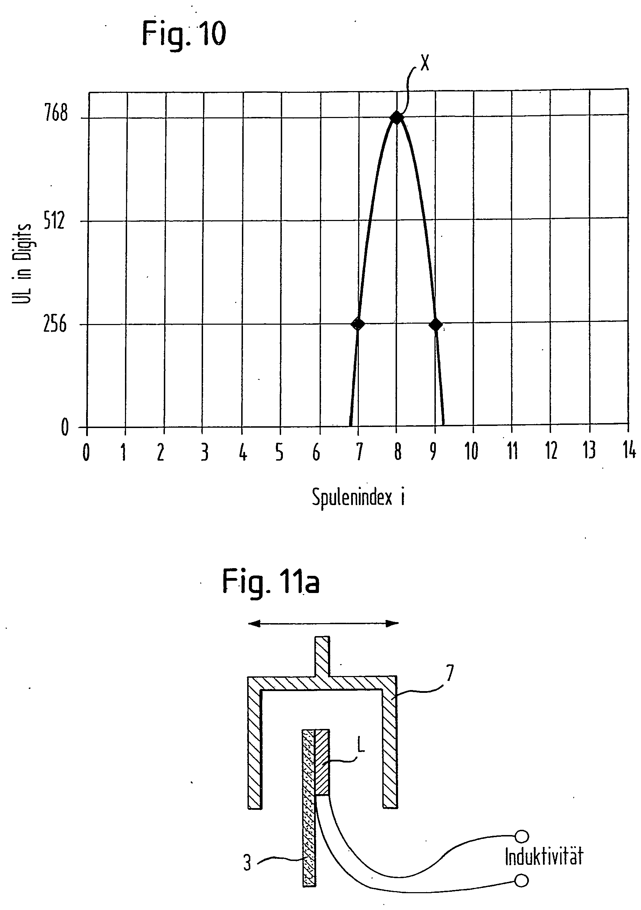

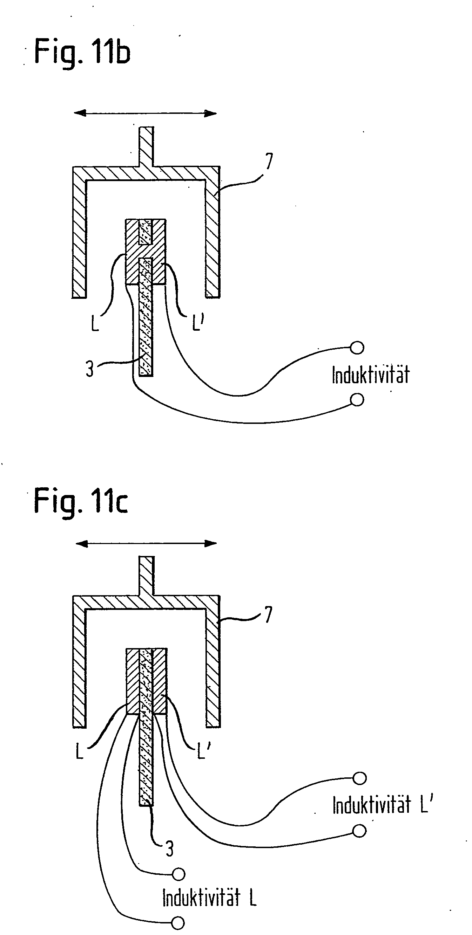

Fig. 11 b: eine induktive Sensoreinheit, bei der zwei planare Sensorinduktivitäten auf gegenüberliegenden Seiten einer Leiterplatte untergebracht und in Serie geschaltet sind; und
Fig. 11 c: eine induktive Sensoreinheit, bei der gegenüberliegende Sensorspuien bzgl. ihrer Induktivität getrennt ausgewertet werden.

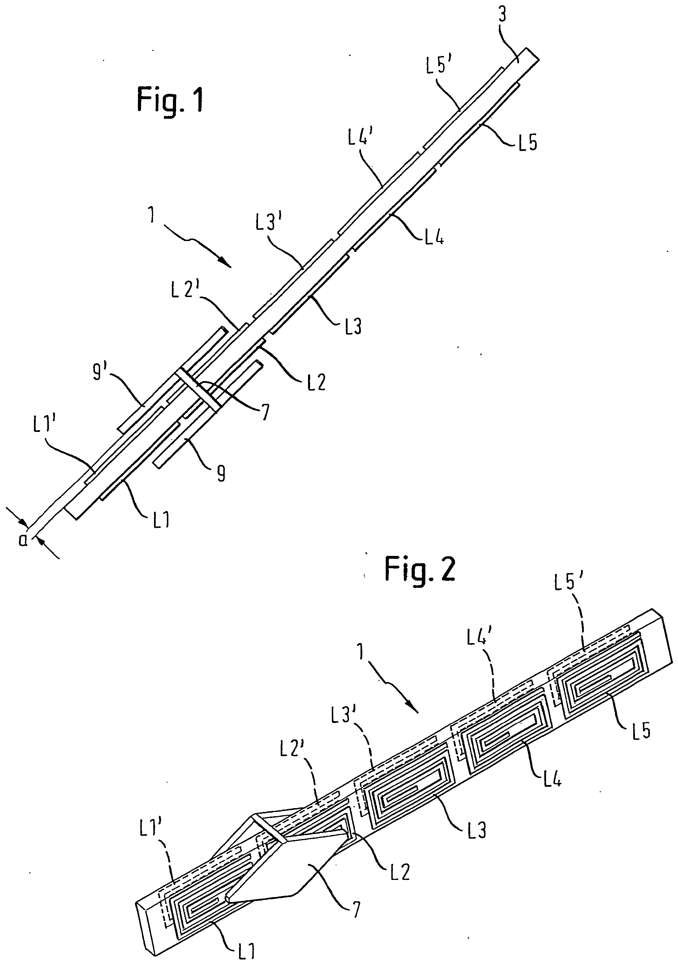

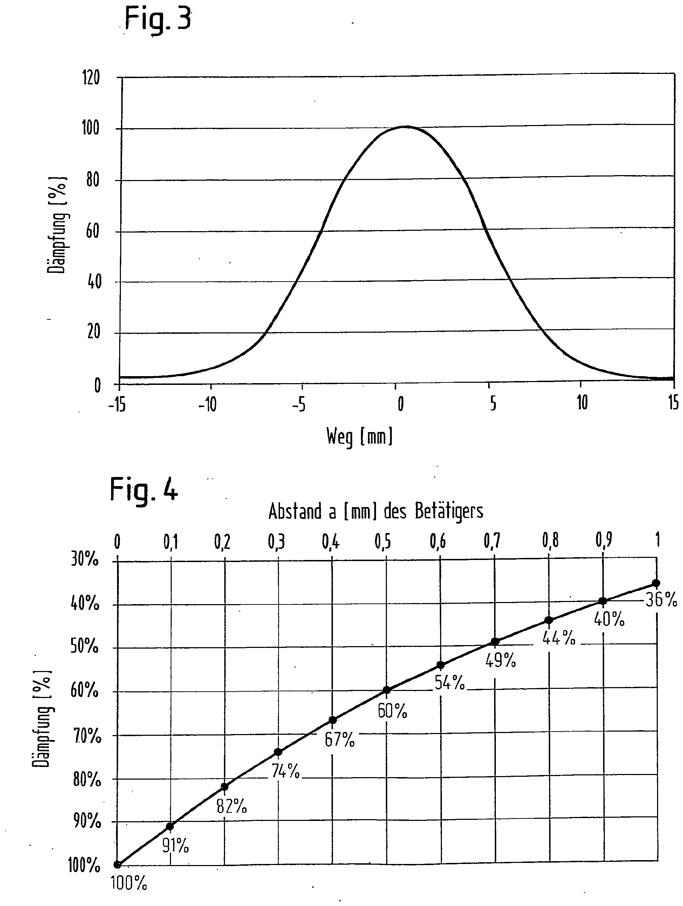

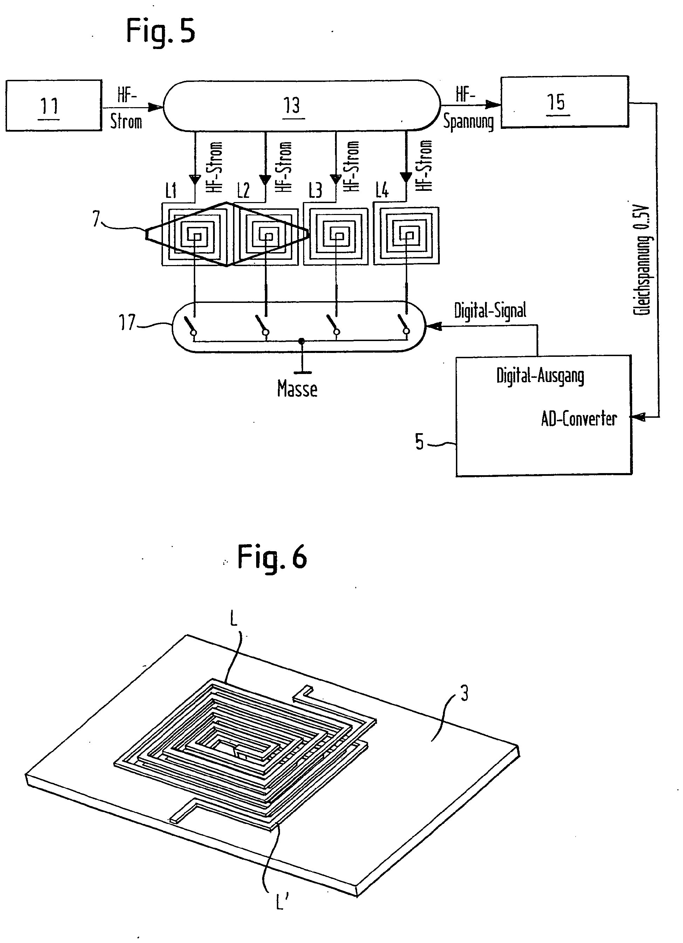

In Fig. 1 ist die Ansicht einer induktiven Sensoreinheit 1 dargestellt. Sie dient der genauen Positionsbestimmung bei induktiven Sensoren Li. Ein induktiver Sensor L Ist eine Spule, die aus mehreren Windungen einer Leiterbahn auf einer Leiterplatte 3 besteht. Zur Erhöhung der Induktivität kann eine Leiterplatte 3 mit mehreren Schichten verwendet werden. Die Induktivität wird mit einer passenden elektronischen Schaltung wie beispielsweise in Fig. 5 dargestellt gemessen. Ein Mikrocontroller 5 wertet die gemessenen Spannungen aus und berechnet daraus eine Weginformation. Legt man ein leitfähiges Betätigungselement 7, insbesondere eine Metallplatte, auf den Sensor L, so wird eine niedrigere Spannung ausgegeben als für den Fall, in dem sich keine Metallplatte 7 in der Nähe befindet. Die Spannungen können so normiert werden, dass die hohe Spannung einem Dämpfungswert von 0% und die niedrige Spannung einem Dämpfungswert von 100% entspricht (vgl. Fig. 3).

Fährt man ein einzelnes Betätigungselement 7 über die Sensoren Li und zeichnet die Dämpfungswerte über dem Weg auf, so erhält man die in Fig. 3 dargestellte Kurvenform. Es kann somit in einem gewissen Bereich jedem Dämpfungswert gemäß Fig. 3 ein Wegpunkt zugeordnet werden.

Die Kurvenform gilt aber nur, wenn der Abstand a des Betätigers 7 zum Sensor Li konstant ist. Verändert man den Abstand an einer bestimmten Position, so ändert sich der Dämpfungswert gemäß Fig. 4. Vergrößert man den Abstand a beispielsweise von 0 mm auf 0,1 mm, so ändert sich die normierte Dämpfung von 100% auf 91%.

Lässt man eine Abstandsänderung zu, die in der Praxis immer auftritt, so ist eine eindeutige Zuordnung zwischen Sensorsignal und Weg nicht mehr möglich. Um diesen Effekt zu eliminieren oder erheblich zu verkleinern, wird ein gabelförmiger Betätiger 7 gemäß Fig. 1 und Fig. 2 verwendet. In Fig. 1 und Fig. 2 ist auch dargestellt, dass die Leiterplatte 3 beidseitig mit Sensoren Li und Li' beschichtet ist. Das Prinzip des gabelförmigen Betätigungselementes 7 funktioniert jedoch auch mit einer einseitig beschichteten Leiterplatte 3 (vgl. Fig. 11a im Unterschied zu den Figuren 11b und 11c).

Wenn beispielsweise in Fig. 1 die Abstände a der beiden Flächen 9 und 9' des gabelförmigen Betätigers 7 zu den beiden Leiterplattenseiten einen Betrag von 0,1 mm haben, so zeigen beide Sensoren Li und Li' eine Dämpfung von 91%. Nähert sich nun der Betätiger 7 der einen Leiterplattenseite auf 0 mm (100% Dämpfung), so entfernt er sich auf der anderen Seite auf 0,2 mm (82% Dämpfung). Durch Addieren der Sensorsignale wird die Abstandsänderung kompensiert. In beiden Fällen ergibt sich ein Signalwert von 182%.

Das Addieren der Signale kann im Mikrocontroller 5 erfolgen (vgl. Fig. 11c). Die beiden Sensoren Li und Li' können aber auch in Reihe geschaltet sein, so dass nur ein Signal entsteht (vgl. Fig. 11b). Durch die Reihenschaltung gemäß Fig. 11b addieren sich die Induktivitäten, was den gleichen Effekt wie die Signaladdition hat.

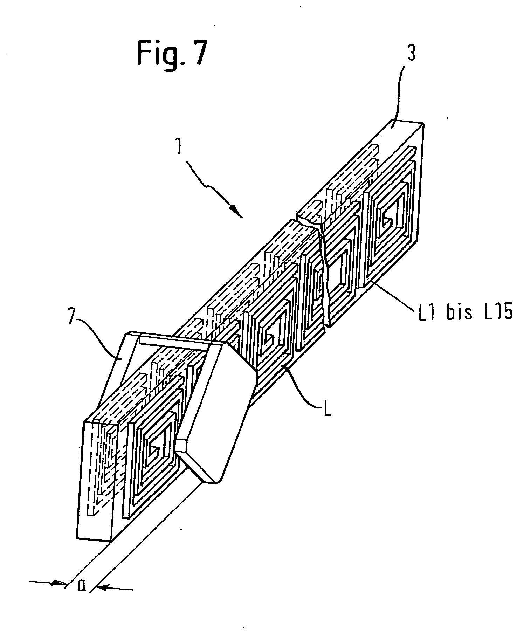

Fig. 5 zeigt ein Ausführungskonzept für eine Sensoreinheit 1. Ein Sinusoszillator 11 erzeugt einen Wechselstrom mit konstanter Amplitude und konstanter Frequenz (z.B. f = 12 MHz). Dieser hochfrequente Wechselstrom wird bei 13 verstärkt und nacheinander (Multiplexer 17) in je eine der Sensorspulen L1, L2, L3, L4 eingespeist. In Fig. 5 sind beispielsweise vier Sensorspulen L1 bis L4 gezeigt, während in Fig. 7, 8 und 9 beispielsweise 15 Sensorspulen L1 bis L1 5 dargestellt sind. Bewegt man ein Betätigungselement 7, das aus gut leitfähigem Material wie z.B. Kupfer oder Messing besteht, über die Spulen L1 bis L4, so verringert sich durch Wirbelstromverluste die Induktivität L der Spulen. Dadurch verringert sich der induktive Widerstand (die Reaktanz) der Spulen proportional. Befindet sich der Betätiger 7 mit seinem Mittelpunkt über einer Spulenmitte, so weist die Spule Li eine maximale Dämpfung auf. Der minimale induktive Widerstand hat einen minimalen Spannungsabfall (bei eingeprägtem Strom) zur Folge.

Der Spannungsabfall an den Spulen L1 bis L4 wird bei 15 gleichgerichtet und einem Mikrocontroller 5 zur Weiterverarbeitung zugeführt.

Ein Beispiel für den Aufbau einer Sensorspule L ist in Fig. 6 dargestellt. Die gewählten Parameter sind keine festen Größen und dienen rein der Veranschaulichung. Die Spulen L und L' befinden sich auf einem Schaltungsträger (z.B. einer Platine oder einer Leiterplatte 3) und sind doppelseitig planar angeordnet. Sie sind miteinander verbunden (vgl. Fig. 11b) und besitzen einen schneckenförmigen Wicklungssinn. Durch diese Anordnung erhöht sich die Windungszahl, was eine höhere Induktivität zur Folge hat.

Aus diesem Element kann eine induktive Sensoreinheit 1 gemäß Fig. 7 gebaut werden. In diesem Ausführungsbeispiel befinden sich 15 Spulen L1 bis L1 5 auf dem Schaltungsträger 3. Die geometrischen Abmessungen der Spulen hängen von der gewünschten Induktivität und vom Material ab. Bei einer 25 mm x 10 mm großen, rechteckigen Spule L mit 40 Windungen erhält man ungefähr eine Induktivität von 14 pH. Die Spulen Li sind nebeneinander angeordnet und besitzen einen Abstand von 25 mm. Bedämpft werden die Spulen von einem rautenförmigen Doppelbetätiger 7 gemäß Fig. 7 (vgl. auch Fig. 2).

Ist ein Sensor Li nicht vom Betätiger 7 bedeckt, so beträgt die Dämpfung 0%; bei voll bedecktem Sensor Li beträgt sie 100% (vgl. Fig. 3). Die Dämpfung ist auch noch vom Abstand a des Betätigers 7 von den Sensorspulen Li abhängig: bei größerem Abstand a verringert sich die maximale Dämpfung, wie in Fig. 4 zu sehen ist.

Durch den Doppelbetätiger 7 gemäß Fig. 7 wird eine Abstandsabweichung kompensiert und die Dämpfung wird bei geeigneter Auswertung konstant gehalten.

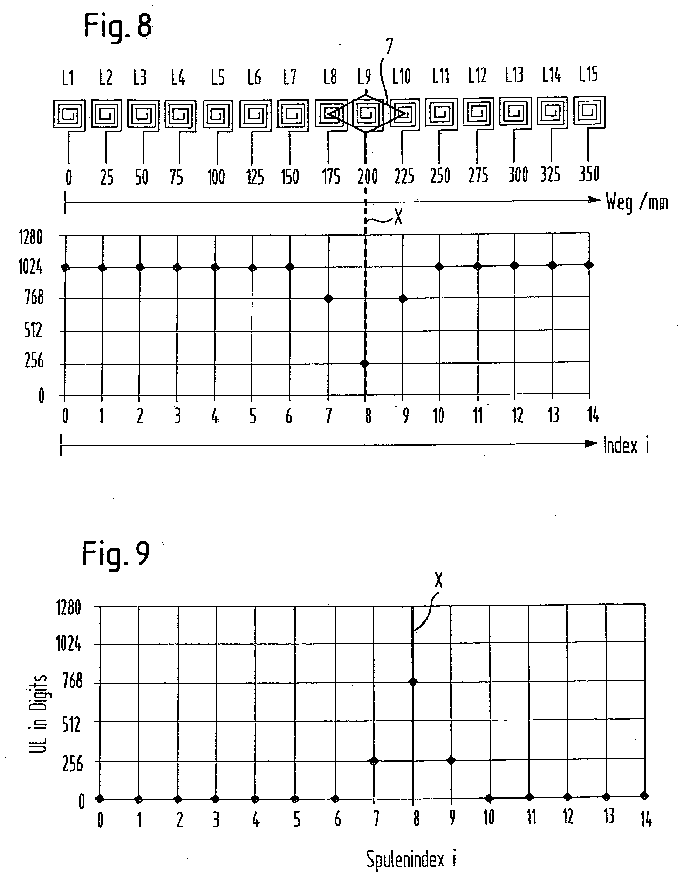

Die Signalauswertung ist in den Figuren 8 und 9 dargestellt. Beispielhaft befindet sich der Betätiger 7 bei einer Wegmarke von 200 mm.

Der Mikrocontroller 5 misst zyklisch in festen Zeitabständen die Spannungen der Sensoren L1 bis L1 5, die proportional zu ihren Induktivitäten sind. Diese Spannungen werden im Mikrocontroller 5 in Binärwerte umgewandelt und in einem Speicher mit Laufindex 0 bis 14 gespeichert. In Fig. 8 sind die gemessenen Spannungen in Abhängigkeit vom Index 0 bis 14 dargestellt.

Im nächsten Schritt wird eine Nullnormierung gemäß Fig. 9 vorgenommen. Dies geschieht, indem der Mikrocontroller 5 aus den Punkten gemäß Fig. 8 das Sensorsignal mit der höchsten Spannung (dem höchsten Binänwert) ermittelt. Im Beispiel ist das die Binärzahl 1024. Danach wird die höchste Spannung von jedem der 15 Sensorwerte subtrahiert. Das normierte Diagramm ist in Fig. 9 zu sehen.

Aus den Zahlenwerten gemäß Fig. 9 lässt sich die Schwerpunktposition der Verteilung nach üblichen mathematischen Algorithmen berechnen. Im Beispiel ergibt sich für die Verteilung über 15 Spulen und einen Spulenabstand von 25 mm ein Schwerpunkt bei x = 200 mm.

In der Praxis tritt bei der Signalerfassung der Spulen Li ein Rauschen auf. Die Spulen Li ohne Dämpfung besitzen keinen ganz konstanten Wert. Dieses Rauschen kann unterdrückt werden, indem man beispielsweise nur die drei kleinsten Spannungswerte berücksichtigt und mit dem Maximum dieser drei Spannungen die Null-Normierung gemäß Fig. 9 durchführt.

Eine andere Möglichkeit zur Positionserfassung ist ein Interpolieren mit einer quadratischen Funktion durch drei Punkte, wie es in Fig. 10 dargestellt ist. Hierzu wird nach der Null-Normierung der maximale Wert der Parabel gesucht. Im Beispiel hat das Maximum den Zahlenwert 768 und liegt bei der Indexspule 8. Als zweiter und dritter Punkt wird der Wert links und rechts vom Maximum benötigt, um die Interpolation durchzuführen. Im Beispiel hat die Spannung links vom Maximum den Zahlenwert 256 und liegt bei Indexspule 7, während der Zahlenwert rechts vom Maximum mit 256 bei der Indexspule 9 liegt. Die Interpolation kann nach bekannten mathematischen Algorithmen erfolgen. Die drei Punkte im Diagramm gemäß Fig. 10 und die Interpolationsparabel zeigen, dass der Scheitelpunkt der Parabel die gesuchte Position des Betätigungselementes 7 ist.

### Bezugszeichen

L induktiver Sensor
L' gegenüberliegender induktiver Sensor
L1 erster induktiver Sensor
Li i. induktiver Sensor
i Spulenindex
a Abstand
X Wegmarke des Schwerpunkts
I induktive Sensoreinheit
3 Leiterplatte
5 Microcontroller
7 leitfähiges Betätigungselement, insbesondere gabelförmige Metallplatte
9, 9' rautenförmige Flächen
II Sinusoszillator
13 Stromverstärker und Strom-Spannungswandler
15 HF-Gleichrichter
17 Multiplexer

## Patentansprüche

1. Verfahren zur Bestimmung einer aktuellen Bahnposition (x) eines Betätigungselements (7) einer induktiven Sensoreinheit (1), insbesondere für eine Positionserkennung eines Fahrzeugsitzes oder für eine Kulissenschalteinheit eines automatischen Getriebes,
- mit einer Mehrzahl von Sensorspulen (L1...Li), die planar auf einer Leiterplatte (3) aufgebracht sind,
- mit einem leitfähigen Betätigungselement (7), das beabstandet (a) auf einer Bahn über die Sensorspulen (L1 ...Li) geführt wird,
- und mit einer elektrischen Auswerteschaltung (5, 11-17), die Induktivitätsänderungen der Sensorspulen (L1...Li) entsprechend einer Bahnposition (x) des Betätigungselements (7) erfasst und in elektrische Signale -insbesondere in Sitzpositionssignale oder in Gangschaltsignale umsetzt, wobei die elektrische Auswerteschaltung (5, 11-17) die Induktivitäten aller Sensorspulen (L1...Li) erfasst und mittels eines Algorithmus in eine aktuelle Bahnposition (x) des Betätigungselements (7) umsetzt, **dadurch gekennzeichnet, dass** der Algorithmus den örtlichen Schwerpunkt (x) der normierten verteilten Sensorsignale als Position berechnet, wobei die elektrische Auswerteschaltung (5, 11-17) zyklisch in festen Zeitabständen die Spannungen der Sensorspulen (L1...Li), die proportional zu den Induktivitäten der Sensorspulen (L1... Li) sind, misst, diese in Binärwerte umwandelt und in einem Speicher ablegt und eine Nullnormierung bezüglich der höchsten gemessenen Spannung durchführt.

2. Verfahren zur Bestimmung einer aktuellen Bahnposition (x) eines Betätigungselements (7) einer induktiven Sensoreinheit (1), insbesondere für eine Positionserkennung eines Fahrzeugsitzes oder für eine Kulissenschalteinheit eines automatischen Getriebes,
- mit einer Mehrzahl von Sensorspulen (L1...Li), die planar auf einer Leiterplatte (3) aufgebracht sind,
- mit einem leitfähigen Betätigungselement (7), das beabstandet (a) auf einer Bahn über die Sensorspulen (L1...Li) geführt wird,
- und mit einer elektrischen Auswerteschaltung (5, 11-17), die Induktivitätssänderungen der Sensorspulen (L1...Li) entsprechend einer Bahnposition (x) des Betätigungselements (7) erfasst und in elektrische Signale - insbesondere in Sitzpositionssignale oder in Gangschaltsignale umsetzt, wobei die elektrische Auswerteschaltung (5, 11-17) die Induktivitäten aller Sensorspulen (L1...Li) erfasst und mittels eines Algorithmus in eine aktuelle Bahnposition (x) des Betätigungselements (7) umsetzt, **dadurch gekennzeichnet, dass** der Algorithmus die normierten verteilten Sensorsignale quadratisch interpoliert und den Extremwert der Parabel als Position (x) berechnet, wobei die elektrische Auswerteschaltung (5, 11-17) zyklisch in festen Zeitabständen die Spannungen der Sensorspulen (L1...Li), die proportional zu den Induktivitäten der Sensorspule (L1... Li) sind misst, diese in Binärwerte umwandelt und in einem Speicher ablegt und eine Nullnormierung bezüglich der höchsten gemessenen Spannung durchführt.

3. Verfahren nach Anspruch 1 oder 2, **dadurch gekennzeichnet, dass** das leitfähige Betätigungselement (7) beidseits beabstandet (9, 9') über die Sensorspulen (L1...Li) geführt wird.

4. Verfahren nach einem der vorangehenden Ansprüche, **dadurch gekennzeichnet, dass** die Mehrzahl von planaren Sensorspulen (L1...Li) auf beiden Seiten (L, L') der Leiterplatte (3) aufgebracht wird.

## Claims

1. Method for determining a current path position (x) of an actuating element (7) of an inductive sensor unit (1), in particular for detecting a position of a vehicle seat or for a gate change unit of an automatic transmission,
- having a plurality of sensor coils (L1...Li) which are applied in a planar manner to a printed circuit board (3),
- having a conductive actuating element (7) which is guided at a distance (a) on a path over the sensor coils (L1...Li),
- and having an electrical evaluation circuit (5, 11-17) which captures inductance changes in the sensor coils (L1...Li) according to a path position (x) of the actuating element (7) and converts them into electrical signals, in particular into seat position signals or into gear change signals, wherein the electrical evaluation circuit (5, 11-17) captures the inductances of all sensor coils (L1...Li) and converts them into a current path position (x) of the actuating element (7) by means of an algorithm, **characterized in that** the algorithm calculates the local centre of gravity (x) of the normalized distributed sensor signals as the position, wherein the electrical evaluation circuit (5, 11-17) cyclically measures the voltages of the sensor coils (L1...Li) which are proportional to the inductances of the sensor coils (L1...Li) at fixed intervals of time, converts them into binary values and stores them in a memory and carries out a zero normalization with respect to the highest measured voltage.

2. Method for determining a current path position (x) of an actuating element (7) of an inductive sensor unit (1), in particular for detecting a position of a vehicle seat or for a gate change unit of an automatic transmission,
- having a plurality of sensor coils (L1...Li) which are applied in a planar manner to a printed circuit board (3),
- having a conductive actuating element (7) which is guided at a distance (a) on a path over the sensor coils (L1...Li),
- and having an electrical evaluation circuit (5, 11-17) which captures inductance changes in the sensor coils (L1...Li) according to a path position (x) of the actuating element (7) and converts them into electrical signals, in particular into seat position signals or into gear change signals, wherein the electrical evaluation circuit (5, 11-17) captures the inductances of all sensor coils (L1...Li) and converts them into a current path position (x) of the actuating element (7) by means of an algorithm, **characterized in that** the algorithm quadratically interpolates the normalized distributed sensor signals and calculates the extreme value of the parabola as the position (x), wherein the electrical evaluation circuit (5, 11-17) cyclically measures the voltages of the sensor coils (L1...Li) which are proportional to the inductances of the sensor coils (L1...Li) at fixed intervals of time, converts them into binary values and stores them in a memory and carries out a zero normalization with respect to the highest measured voltage.

3. Method according to Claim 1 or 2, **characterized in that** the conductive actuating element (7) is guided on both sides at a distance (9, 9') over the sensor coils (L1...Li).

4. Method according to one of the preceding claims, **characterized in that** the plurality of planar sensor coils (L1...Li) are applied to both sides (L, L') of the printed circuit board (3).

## Revendications

1. Procédé de détermination de la position de parcours actuelle (x) d'un élément d'actionnement (7) d'une unité de capteur à induction (1), en particulier pour une détection de position d'un siège de véhicule ou pour une unité de changement de vitesses à coulisse d'une transmission automatique, comportant
- une pluralité de bobines de capteur (L1.... Li) qui sont montées planes sur une carte de circuit imprimé (3),
- un élément d'actionnement conducteur (7) qui est guidé à une distance (a) sur un trajet passant au-dessus des bobines de capteur (L1... Li),
- et un circuit d'évaluation électrique (5, 11-17) qui détecte des variations d'inductance des bobines de capteur (L1 ... Li) correspondant à une position de parcours (x) de l'élément d'actionnement (7) et les convertit en signaux électriques - en particulier en signaux de position de siège ou en signaux de changement de vitesse, dans lequel le circuit d'évaluation électrique (5, 11-17) détecte les inductances de toutes les bobines de capteur (L1 ... Li) et les convertit au moyen d'un algorithme en une position de parcours actuelle (x) de l'élément d'actionnement (7), **caractérisé en ce que** l'algorithme calcule en tant que position le centre de gravité local (x) des signaux de capteur distribués et normalisés, dans lequel le circuit d'évaluation électrique (5, 11-17) mesure cycliquement les tensions des bobines de capteur (L1 ... Li) à des intervalles de temps fixes, lesquelles tensions sont proportionnelles aux inductances des bobines de capteur (L1 ... Li), les convertit en des valeurs binaires et les stocke dans une mémoire et effectue une normalisation du zéro par rapport à la tension mesurée la plus élevée.

2. Procédé de détermination d'une position de parcours actuelle (x) d'un élément d'actionnement (7) d'une unité de capteur à induction (1), en particulier pour une détection de position d'un siège de véhicule ou pour une unité de changement de vitesses à coulisse d'une transmission automatique, comportant
- une pluralité de bobines de capteur (L1 ... Li) qui sont montées planes sur une carte de circuit imprimé (3),
- un élément d'actionnement conducteur (7) qui est guidé à une distance (a) sur un trajet passant au-dessus des bobines de capteur (L1 ... Li),
- et un circuit d'évaluation électrique (5, 11-17) qui détecte des variations d'inductance des bobines de capteur (L1 ... Li) correspondant à une position de parcours (x) de l'élément d'actionnement (7) et les convertit en signaux électriques - en particulier en signaux de position de siège ou en signaux de changement de vitesse, dans lequel le circuit d'évaluation électrique (5, 11-17) détecte les inductances de toutes les bobines de capteur (L1, Li) et les convertit au moyen d'un algorithme en une position de parcours actuelle (x) de l'élément d'actionnement (7), **caractérisé en ce que** l'algorithme interpole de manière quadratique les signaux de capteur distribués et normalisés et calcule en tant que position de parcours (x) la valeur extrême de la parabole, dans lequel le circuit d'évaluation électrique (5, 11- 17) mesure cycliquement les tensions des bobines de capteur (L1 ... Li), lesquelles tensions sont proportionnelles aux inductances de la bobine du capteur (L1 ... Li), les convertit en des valeurs binaires et les stocke dans une mémoire et effectue une normalisation du zéro par rapport à la tension mesurée la plus élevée.

3. Procédé selon la revendication 1 ou 2, **caractérisé en ce que** l'élément d'actionnement conducteur (7) est guidé sur les bobines de capteur (L ... Li) de manière espacée des deux côtés (9, 9').

4. Procédé selon l'une des revendications précédentes, **caractérisé en ce que** la pluralité de bobines de capteur planes (L1... Li) sont montées sur les deux faces (L, L') de la carte de circuit imprimé (3) .
